# EUROPEAN PATENT APPLICATION

(11) **EP 2 509 290 A1**
(43) Date of publication of application: **10.10.2012**
(21) Application number: 11002762.0
(22) Date of filing: 01.04.2011
(51) Int. Cl.: H04M 1/725, H04M 1/02, H01R 31/06, G06K 19/077, H04B 1/38, G06F 1/16

(54) **Communication module connectable with an electronic device, such electronic device communication system , and method for operating a communication module in an electronic device**

(71) Applicant: TCT Mobile International Limited, Kowloon (HK)
(72) Inventor: Liu Yuk Tung, Thomas, TsimSha Tsui Hong Kong-Kowloon (HK); Hu Xue Long, Ronald, TsimShaTsui Hong Kong-Kowloon (HK); Chiang, Stephen Sushen, TsimShaTsui Hong Kong-Kowloon (HK); Zhao, Shiqing, TsimShaTsui Hong Kong-Kowloon (HK)
(74) Representative: Brachmann, Roland W.

(57) **Abstract**

A communication module (MD) is provided comprising a processing device (C) being arranged such that said module is connectable to at least one wireless communication system (NW) and an interface (MC) being arranged such that said module is connectable via said interface with at least one of a plurality of electronic devices (MS, GD, TV). Further, such an electronic device is provided comprising a device processing device (DC) being arranged such that said it provides such a connection and functionality via said interfaces (MC, SC).

Furthermore, a communication system is suggested comprising such modules and devices.

In addition, a method is provided for executing such a communication module (MD) in such an electronic device (MS, GD, TV) comprising the steps of exchanging data and initializing a connection to said at least one wireless communication system (NW) and functionality to at least one of said electronic device and said module.

## Description

The invention relates to a communication module connectable with an electronic device, to such electronic device, to a communication system comprising such modules and electronic devices, and to a method for operating such communication module in such electronic device.

There are a great variety of electronic devices, e.g., mobile stations, mobile phones, cellular phones, personal computers, smart phones, graphical devices, tablet personal computers, broadcasting receivers, personal digital assistants, and television devices, in particular an internet television device. Most of these electronic devices provide a display unit for showing, e.g., pictures, cinematic pictures, video or text, and at least one speaker for providing audio to the user of such device. In addition, some of these electronic devices like mobile phones provide a processing device being arranged such that the device is connectable to a wireless communication system allowing access to different kinds of information, e.g., audio, video, data, signaling information, software and the like.

However, several such electronic devices do not provide components and functions allowing a direct access to such a wireless communication system.

The **problem** to be solved is to enable flexible access a wireless communication systems. In particular, a further device may be provided that allows access to the wireless communication system for several electronic devices, e.g., of different technology and/or functionality.

This problem is solved according to the features of the independent claims. Further embodiments result from the depending claims.

In order to overcome this problem, a communication module comprises a processing device being arranged such that said module is connectable to at least one wireless communication system and an interface being arranged such that said module is connectable via said interface with at least one of a plurality of electronic devices.

The communication module allows electronic devices to access a wireless communication system. The wireless communication system can be any type of wireless communication system including wireless local area networks or mobile communication systems, e.g., according to mobile cellular communication system standards like Universal Mobile Telecommunications System (UMTS).

In an embodiment, the processing device of such communication module provides a connection to said at least one wireless communication system and in particular a functionality via the interface the connected electronic device.

It is noted that the processing device in particular enables operation with the electronic device connected via the interface.

In another embodiment, said processing device of such communication module comprises a base-band functionality via said interface to said at least one connected electronic device.

The processing device providing base-band functionality may comprise software and/or hardware components to access the wireless communication system according to at least one communication standard, e.g., UMTS, GSM, GPRS, LTE, WLAN, Bluetooth, etc.

In a further embodiment, said processing device is arranged such that software or data is retrieved from a memory arranged in the module, from the connected electronic device via the interface and/or from the at least one wireless communication system in particular in case such software or data is at least partially required for operating the connected electronic device by said processing device.

Hence, the communication module and the electronic device could be provided for a large number of different device types that may require various software drivers to allow the module to interact with all kinds of today's and future electronic devices. Such software can be obtained (downloaded) from the memory or via the wireless communication system. For example, a new electronic device may have stored module drivers in its memory and supply the module with a new driver. In addition, it is possible to provide software or data, e.g., a driver stored in the memory of the module, for the processing device of the electronic device. Further, after a first interaction and determination of parameters and/or features, components and software of the other component, actual software or data like drivers could be downloaded from a server via the wireless communication system.

In a next embodiment, such communication module comprises an identity element slot for providing identity information, in particular subscriber identity information of an identity element inserted in said identity element slot to at least one of the modules and/or the connected electronic device.

It is also an embodiment that said plurality of electronic devices comprises at least two communication devices of different technology.

Pursuant to yet an embodiment, said plurality of electronic devices comprises at least two of the following: a mobile station, a mobile phone, a cellular phone, a personal computer, a smart phone, a graphical device, a tablet personal computer, a broadcasting receiver, a personal digital assistant, and a television device, in particular an internet television device.

In particular, access to the wireless communication system can be provided to several electronic devices of different technologic by such communication module. For example, one device can be a broadcasting device receiving merely audio data or audio and video data via broadcast or unicast transmission (e.g., via the Internet). The processing device and its software can provide uni- or bi-directional access to the wireless communication system.

For example, a tablet personal computer that may not be equipped with a component that allows access to the wireless communication system. However, by connecting the tablet personal computer to the communication module access to a wireless communication system can be provided.

According to an embodiment, an electronic device is provided comprising a module's device interface being arranged such that said electronic device is connectable via said device interface with an interface of such a communication module as described herein, and a device processing device of the electronic device being arranged such that said device processing device provides a connection to said at least one wireless communication system and operation via said device interface and said interface of said module.

Hence, the device processing device can interwork with the module's processing device to enable access of the electronic device to the wireless communication system. For example, in such arrangement the processing device of the module can provide various functionalities to be utilized by the processing device of the device.

According to an embodiment, the electronic device comprises an identity element slot for providing an identity information to the module and/or the connected electronic device, wherein the identity information in particular comprises a subscriber identity information of an identity element inserted in the identity element slot.

For example, such identity element slot provided in such module or in such connected electronic device can be a subscriber identity module card slot. The identity element can be a subscriber identity module card or any other data carrier that can be used for storing identity information of, e.g., a user of the communication module or a user's company.

The identity element can supply personal data to one or to both devices. The devices may allow access to some or all data or programs stored therein or to a functionality of at least one of these devices. For example, an access to a company's data base using the electronic device and the module can be achieved via the wireless communication system.

The problem stated supra is further solved by a communication system comprising at least one of such communication modules and at least one of the electronic devices.

The problem stated above is further solved by a method for providing access to a communication system,
- wherein an interface of a communication module is connected with a device interface of an electronic device;
- wherein a communication between the module and the electronic device is initialized; and
- wherein the electronic device gets access to the communication system.

The connection may in particular comprise an electrical and/or a mechanical interface and/or connection. For example, the electrical connection can be provided by electric contact elements being in contact after the module has been inserted (plugged-in) into the electronic device. The mechanical connection can be provided by a slot having mechanic guide elements to guide the module into a position providing electric contact; notch elements can be arranged for temporarily fixing the module.

Initialization of communication in particular may comprise exchanging data between the module and the electronic device, said data being used for setting up the (data or payload) communication between each other and/or the (wireless) communication system or network.

Providing access can comprise providing, conveying or transmitting information, data and/or signaling information via said interfaces between the (processing device of the) electronic device and the (processing device of the) module and via said at least one wireless communication system. Such access can be provided to at least one of said electronic device and said module.

Pursuant to another embodiment, the communication is initialized via a hot-plug functionality when connecting the electronic device with the module.

One or both of the electronic device and the communication module can be active before and/or after the two devices being connected. In particular, an energy source (e.g., battery, capacitor, etc.) can be arranged in the communication module and allows for independent operation even in case the communication module is not physically connected to the electronic device. Thus, the communication module can be removed from a first electronic device and inserted in a second (or even the same first) electronic device while maintaining an active connection (or at least some state of connection) to the wireless communication system.

According to another embodiment, software or data is retrieved from a memory arranged in the module or in said electronic device via the interfaces providing operation to the connected electronic device by said processing device and said module by utilizing the software or data.

In yet another embodiment, identity information of an identity element, in particular a subscriber identity module card inserted in an identity element slot arranged in the communication module or in said electronic device is provided to the module and/or the electronic device.

According to a next embodiment, the method described herein is arranged for operating such a communication module in such an electronic device.

In particular, the processing devices can be devices comprising and/or being associated with a processor unit and/or a hard-wired circuit and/or a logic device that is arranged such that the method as described herein is executable on said processor unit.

Embodiments of the invention are shown and illustrated in the following figure:

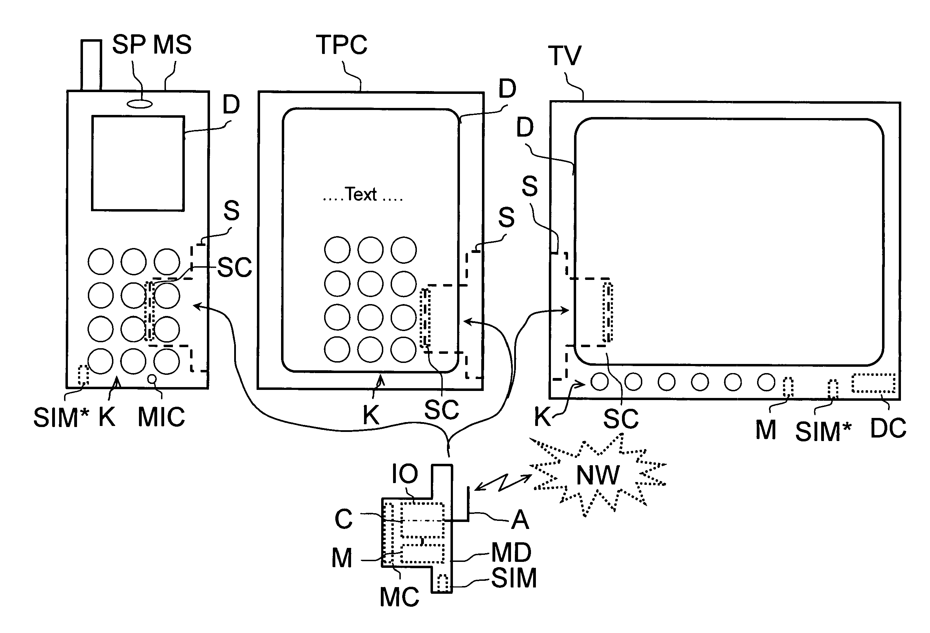

Fig. 1 shows an exemplary arrangement of a communication module and three electronic devices, each of them being able to connect the communication module.
**Fig.1** shows different electronic devices, e.g., a mobile station MS, a tablet personal computer TPC, and a television device TV.

All of the electronic devices comprise a slot S being arranged for receiving a communication module MD. The slot S comprises a device interface SC enabling an exchange of signals, in particular data with the communication module MD.

The communication module MD comprises an interface MC, which is connectable to the device interface SC. The interface MC allows an exchange of signals, data or any kind of information with the device interface SC.

The communication module MD comprises a processing device C being arranged to set up or initialize a connection with a wireless communication system NW, in particular between the wireless communication system NW and the electronic device MS, TPC or TV.

Usually, such a mobile station MS comprises components and functions to configure a link via the wireless communication system using, e.g., UMTS. However, connecting the communication module MD with the mobile station MS provides a high degree of flexibility and additional functions, e.g., to enable access for the mobile station MS to other radio communication systems.

Connecting the communication module MD to the tablet personal computer TPC upgrades the functionality of the tablet personal computer TPC by giving access to the hard- and software components of the communication module MD. For example, the communication module MD may comprise an external (e.g., input-output) interface IO to be used by the tablet personal computer TPC. Also the tablet personal computer TPC may use the connectivity to the communication system NW provided by the communication module MD.

When the communication module MD is inserted and hence connected to the television device TV, access to the wireless communication system NW can be used to receive broadcast television programs, e.g., via the Internet. For example, the communication module MD may provide additional hard- and software for the television device TV to enable uni- or bi-directional communication via the wireless communication system NW.

The communication module MD may further comprise an antenna A, an energy source, said external interface IO and/or a processing device C.

The memory M can be used to store data or software for, e.g., running the processing device C. In addition, data and/or software, e.g., drivers, can be stored with the memory M enabling communication with different types of electronic devices. In particular, data and software can be transmitted to an electronic device thereby allowing a device processing device DC to interact with the communication module MD and/or the wireless communication system NW (e.g., via the communication module MD).

The communication module MD may comprise an identity element slot SIM to which an identity element such as a subscriber identity module card can be inserted. Identity information read from such subscriber identity module card can be used by the module's processing device C or by the device processing device DC to get access to a component, e.g., a server, and/or data in the wireless communication system NW, e.g., the Internet. On basis of such identity information, access could be granted to some or all functions, software or hardware components within the communication module MD and/or within the electronic device.

Further, an identity element slot SIM* can be provided in one or more of such electronic devices as is exemplarily shown for the mobile station MS and the television device TV.

If the processing device C, DC of one of the communication module MD or the electronic device requires access to the identity information on the other of the communication module MD and the electronic device, the identity information could be transmitted via the interfaces SC, MC. According to other exemplary embodiments, the identity information could be encoded or encrypted prior to an actual transmission or the processing device C, DC may transmit a signature or may conduct some steps necessary to handle and/or verify identity information issues.

As an option, the electronic devices may also comprise further components and functions like a display D for displaying information such as pictures, film sequences or text, at least one speaker SP for outputting audio data, at least one microphone MIC for recording audio data, a keypad K for inputting information, and a memory for storing data and/or software.

### List of Abbreviations:

- A: antenna
- C: processing device
- D: display
- DC: device processing device
- IO: external interface to wireless communication system
- K: keypad
- M: memory
- MC: interface of module
- MD: communication module
- MIC: microphone
- MS: mobile station
- S: slot
- SC: device interface
- SP: speaker
- SIM, SIM*: identity element slot
- TPC: tablet personal computer
- TV: television device
- NW: wireless communication system

## Claims

1. A communication module (MD) comprising
- a processing device (C) being arranged such that said module (MD) is connectable to at least one wireless communication system (NW) and
- an interface (MC) being arranged such that said module (MD) is connectable via said interface (MC) with at least one of a plurality of electronic devices (MS, GD, TV).

2. The device according to claim 1, wherein said processing device (C) provides a connection to said at least one wireless communication system (NW) and in particular a functionality via the interface (MC) to the connected electronic device (MS, GD, TV).

3. The device according to claim 1 or 2, wherein said processing device (C) comprises a base-band functionality via said interface (MC) to said at least one connected electronic device (MS, GD, TV).

4. The device according to any of the preceding claims, wherein said processing device (C) is arranged such that software or data is retrieved from a memory (M) arranged in the module (MD), from the connected electronic device (MS, GD, TV) via the interface (MC) and/or from the at least one wireless communication system (NW) in particular in case such software or data is at least partially required for operating the connected electronic device (MS, GD, TV) by said processing device (C).

5. The device according to any of the preceding claims comprising an identity element slot (SIM) for providing identity information, in particular subscriber identity information of an identity element inserted in said identity element slot (SIM) to at least one of the modules and/or the connected electronic device (MS, GD, TV).

6. The device according to any of the preceding claims, wherein said plurality of electronic devices (MS, GD, TV) are at least two communication devices of different technology.

7. The device according to any of the preceding claims, wherein said plurality of electronic devices (MS, GD, TV) comprises at least two of the following:
- a mobile station (MS),
- a mobile phone,
- a cellular phone,
- a personal computer,
- a smart phone,
- a graphical device,
- a tablet personal computer (TPC),
- a broadcasting receiver,
- a personal digital assistant, and
- a television device (TV), in particular an Internet television device.

8. An electronic device (MS, GD, TV) comprising
- a device interface (SC) being arranged such that said electronic device (MS, GD, TV) is connectable via said device interface (SC) with an interface (MC) of a communication module (MD) according to any of the preceding claims and
- a device processing device (DC) being arranged such that said device processing device (DC) provides a connection to said at least one wireless communication system (NW) and operation via said device interface (SC) and said interface (MC) of said module (MD).

9. The device according to claim 8 comprising an identity element slot (SIM*) for providing an identity information to the module and/or the connected electronic device (MS, GD, TV), wherein the identity information in particular comprises a subscriber identity information of an identity element inserted in the identity element slot (SIM).

10. A communication system comprising at least one communication module (MD) according to any of the claims 1 to 7 and at least one electronic device (MS, GD, TV) according to any of claims 7 to 9.

11. A method for providing access to a communication system,
- wherein an interface (MC) of a communication module (MD) is connected with a device interface (SC) of an electronic device (MS, GD, TV);
- wherein a communication between the module and the electronic device is initialized; and
- wherein the electronic device gets access to the communication system.

12. The method according to claim 11, wherein the communication is initialized via a hot-plug functionality when connecting the electronic device (MS, GD, TV) with the module (MD).

13. The method according to claim 11 or 12, wherein software or data is retrieved from a memory (M) arranged in the module (MD) or in said electronic device (MS, GD, TV) via the interfaces (MC, SC) providing operation to the connected electronic device (MS, GD, TV) by said processing device (C) and said module (MD) by utilizing the software or data.

14. The method according to any of claims 11 to 13, wherein an identity information of an identity element, in particular a subscriber identity module card, inserted in an identity element slot (SIM) arranged in the module (MD) or in said electronic device (MS, GD, TV) is provided to the module and/or the electronic device (MS, GD, TV).

15. The method according to any of claims 11 to 14 being arranged for operating a communication module (MD) according to any of the claims 1 to 7 in an electronic device (MS, GD, TV) according to any of claims 7 to 9.
